**Europäisches Patentamt**

**European Patent Office**

**Office européen des brevets**

(11) Publication number : **0 477 010 A1**

# (12) EUROPEAN PATENT APPLICATION

(21) Application number : **91308544.5**

(22) Date of filing : **19.09.91**

(51) Int. Cl.⁵ : **B62J 9/00**

(30) Priority : **19.09.90 GB 9020405**

(43) Date of publication of application :
**25.03.92 Bulletin 92/13**

(84) Designated Contracting States :
**CH DE FR GB IT LI NL**

(71) Applicant : **KARRIMOR INTERNATIONAL LIMITED**
**Petre Road, Clayton-le-Moors**
**Accrington Lancashire, BB5 5JP (GB)**

(72) Inventor : **Parsons, Michael Charles**
**2 Manorhouse Farm, Upper Thong**
**Holmfirth, Yorkshire (GB)**
Inventor : **Farnworth, Michael Adrian**
**9 Baytree Road, Clayton-le-Woods**
**Chorley, Lancs (GB)**

(74) Representative : **Barker, Rosemary Anne et al**
**c/o Mewburn Ellis, 2 Cursitor Street**
**London EC4A 1BQ (GB)**

(54) **Cycle pannier attachment means.**

(57) A first attachment member (10) provided with a first set of engagement portions, in this case in the form of downwardly open dovetail shape recesses (12) with downwardly divergent side edges, is mounted onto a first element such as cycle pannier (11). A second set of engagement portions, in this case in the form of matching dovetail shape projections (22) are secured to a second element such as a pannier mounting frame (21) of a cycle. The pannier (11) is then mounted onto the frame by seating of recesses (12) over projections (22).

The arrangement of projections and recesses could be reversed, with upwardly open recesses with upwardly divergent side edges mounted on the frame for reception of corresponding dovetail projections with narrower lower ends on the pannier.

One set of engagement means may comprise separate components, and the arrangement can be adapted for mounting of a front pannier to handlebars (Figs. 8 and 9), for attachment of a rucksack back panel to a pannier (for conversion to a rucksack) (Fig. 10), or for mounting of other elements altogether.

EP 0 477 010 A1

Fig. 1

This invention relates to attachment means particularly suited for releasable mounting of panniers upon bicycles, but not exclusively limited thereto.

Conventionally, there are four positions at which panniers may be mounted on a bicycle, namely at each side of the rear wheel (a balanced pair), at each side of the front wheel, and possibly at a relatively low location (also a balanced pair), on the handlebars (a single bag), and behind the seat (also a single bag). For the mounting of each type (with the possible exception of some small styles of seat bag) a wire frame of appropriate shape is firstly fixed to the cycle, respectively over the rear wheel, or over the front wheel, or on the handlebars, and the pannier or panniers are then attached. The conventional manner of attachment is by means of a pair of hooks, which are secured to a transverse metal strip across the rear and near the top of each pannier and engage a relevant frame member. The lower region, at least of a side pannier, is then secured against excessive swinging movement by another hook, carried on a strap, which may be either elasticated or adjustable in length, engaging below a lower part of the frame.

A proposal has been disclosed in US 4,798,318 for a releasable attachment assembly specifically for front panniers for attachment to cycle handlebars wherein a bracket fastened to the handlebar is of dovetail configuration with side edges which diverge downwards and a structure provided on the pannier defines a corresponding downwardly open recess for fitting over the bracket.

An object of the present invention is to provide improved pannier attachment means, which can be applied to all types of panniers, i.e. panniers designed for mounting in all the various positions outlined above.

According to the invention attachment means, particularly but not exclusively for cycle panniers, comprises a first attachment member adapted to be fixedly secured to a first element, such as a cycle pannier, and provided with a first set of at least two spaced apart engagement portions, and a second set of at least two engagement portions which in use are secured to a second element, such as a cycle frame or fitment, or rucksack back panel, for fitting to the engagement portions of the first member, one of the sets of engagement portions comprising projections with tapering side edges and the other or the sets comprising matching recesses with tapering side edges for location thereover, or for reception thereof.

The first attachment member is advantageously in the form of an elongate strip or bar, which can be secured to a conventional pannier by bolts, rivets, adhesive, stitching or any other suitable fastening means. It will generally be secured to the rear panel of the pannier, transversely and near the top.

The first attachment member is advantageously formed in one piece of relatively rigid, yet resilient plastics, e.g. by moulding.

The second set of engagement portions are advantageously provided on a common second attachment member.

Where there is such a common second attachment member it is preferably of generally similar form to the first member, namely an elongate strip or bar of relatively rigid plastics. In the case of attachment means for cycle pannier mounting, such a common second member should be securable to a pannier mounting frame, e.g. by a clamping arrangement or by clips or hooks, which may be integrally formed. However, in the case of a front pannier, such a common second attachment member may be mounted on a special bracket which fits to the handlebars.

In the case of a convertible pannier/rucksack, separate members providing respective second engagement portions, may be provided on a rucksack back panel, provided with shoulder straps, for fitting to a first attachment member on a cycle pannier when the latter is released from its mounting on a cycle. The back panel may additionally be releasably secured to the pannier, particularly around its edge margins, by sliding clamp fasteners or strips of barbed fastener material (TM Velcro). The separate members may advantageously also provide means for attachment of the tops of the respective shoulder straps. In other embodiments, it would, of course, also be possible to have a common second member extending across the rucksack back panel and providing both second engagement portions, and optionally both strap attachment means. However, the complexity of such a one-piece component may not be justified.

In accordance with the invention generally, i.e. in all embodiments of the attachment means, two alternative arrangements are possible for effective interconnection of the first and second engagement portions.

The first set of engagement portions on the first member may consist of projections having side edges which diverge upwardly (i.e. projections with narrower lower ends and broader upper ends), whilst the second set of engagement portions consist of recesses of corresponding shape. i.e. which have upwardly divergent side edges and are open at the top so as to snugly receive the aforesaid projections.

Alternatively, however, the first set of engagement portions on the first member may consist of recesses having side edges which diverge downwards and are open at the bottom, whilst the second engagement portions consist of projections of corresponding shape, i.e. with narrower upper ends and broader lower ends, over which the aforesaid recesses will snugly fit.

In either case, both recesses and projections are advantageously provided with undercut grooves along their side edges to ensure particularly secure interengagement.

Various specific embodiments of the attachment means of the invention will now be described, with reference to the accompanying drawings, in which:

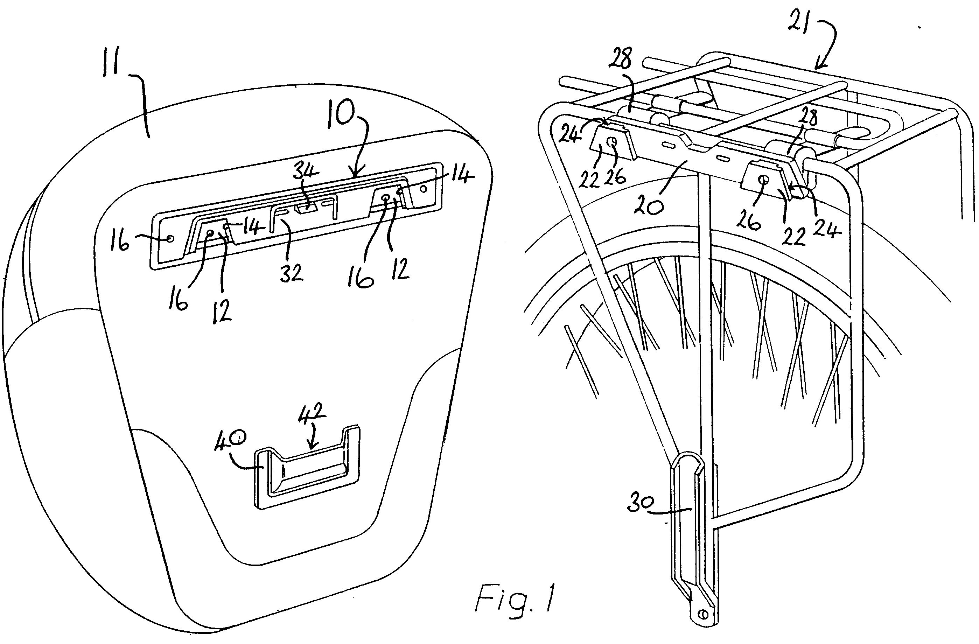

Fig. 1 shows a first practical embodiment of the attachment means of the invention consisting of four members which are used for mounting a front or rear wheel pannier;

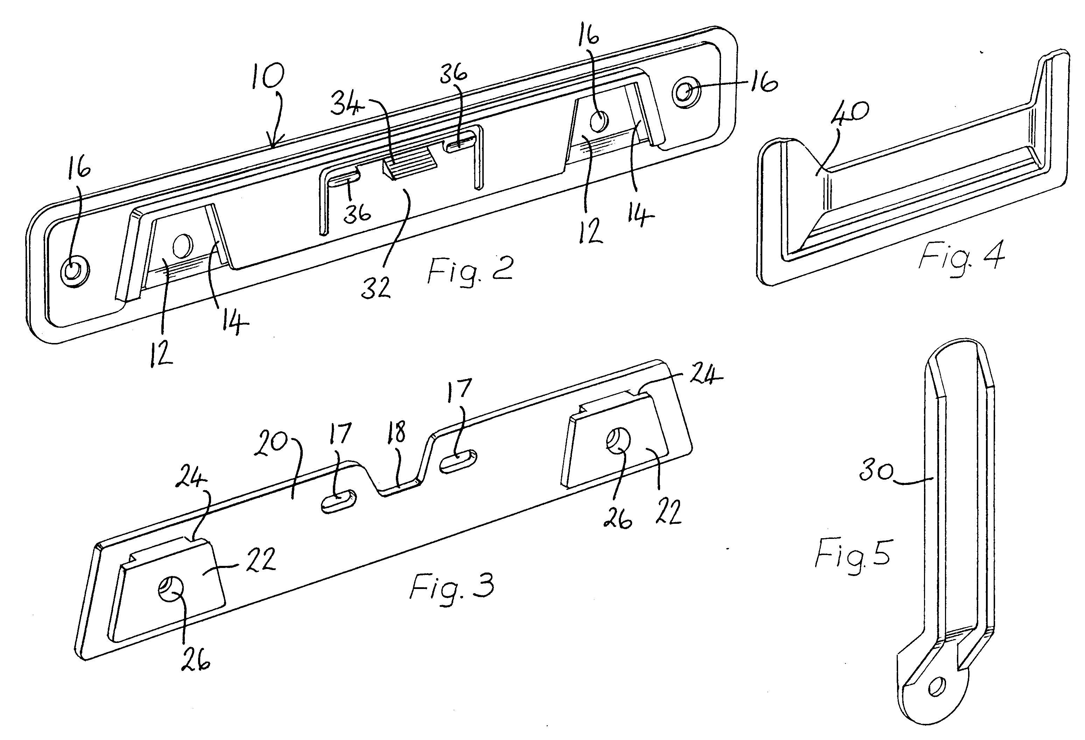

Fig. 2, 3, 4 and 5 are enlarged perspective views of the four individual member of the Fig. 1 arrangement;

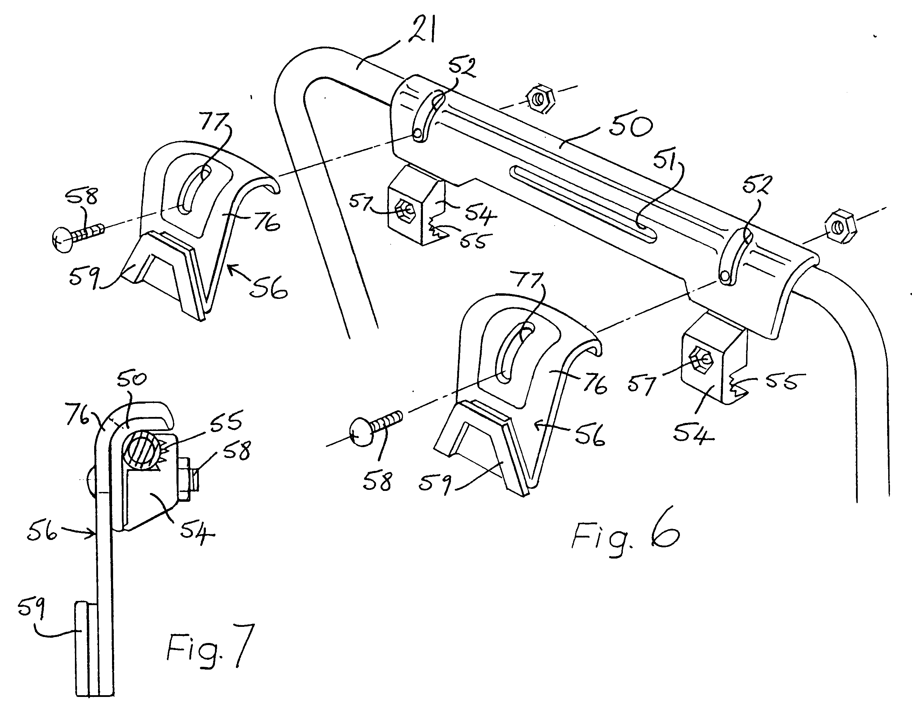

Fig. 6 is an exploded view of an alternative common second attachment member for fitting to a cycle pannier mounting frame;

Fig. 7 is an end view of the member Fig. 6 showing the components fastened together and engaging a frame member of a cycle pannier mounting frame;

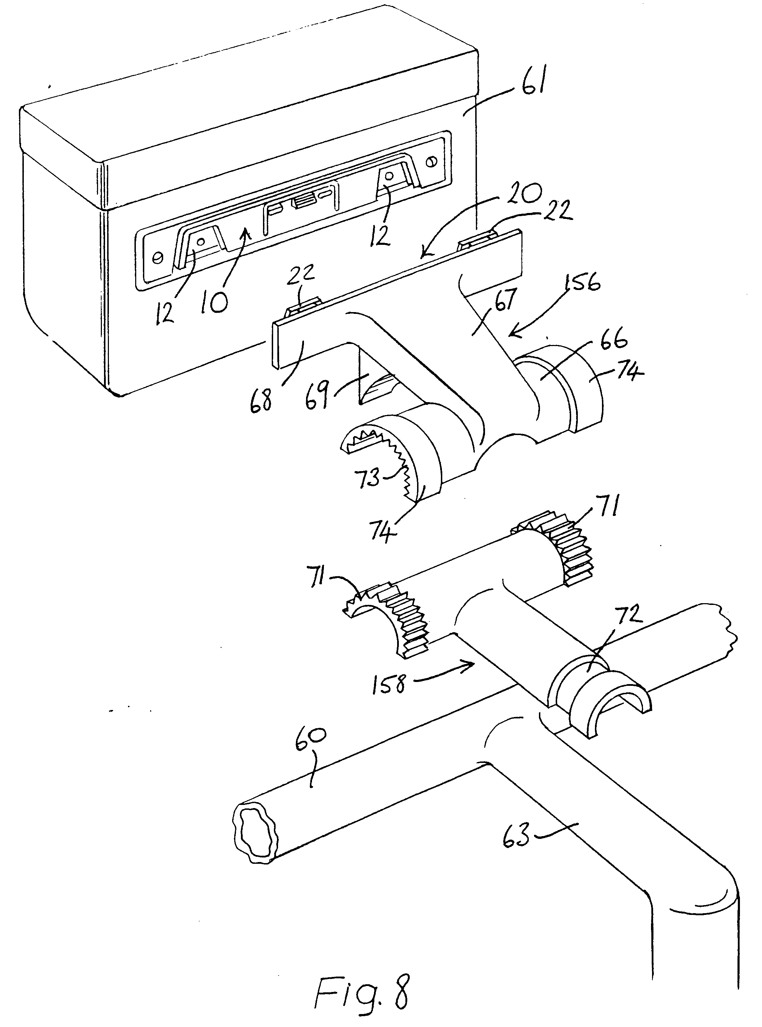

Fig. 8 is an exploded view of components constituting another practical embodiment of attachment means in accordance with the invention, specifically for mounting a front pannier to cycle handlebars;

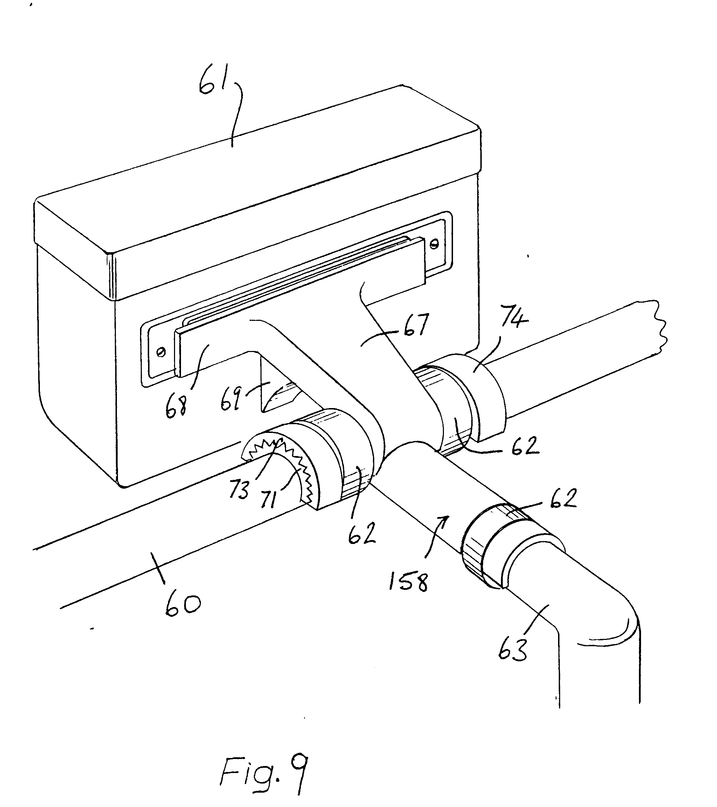

Fig. 9 shows the same arrangement as Fig. 8 when fully assembled; and

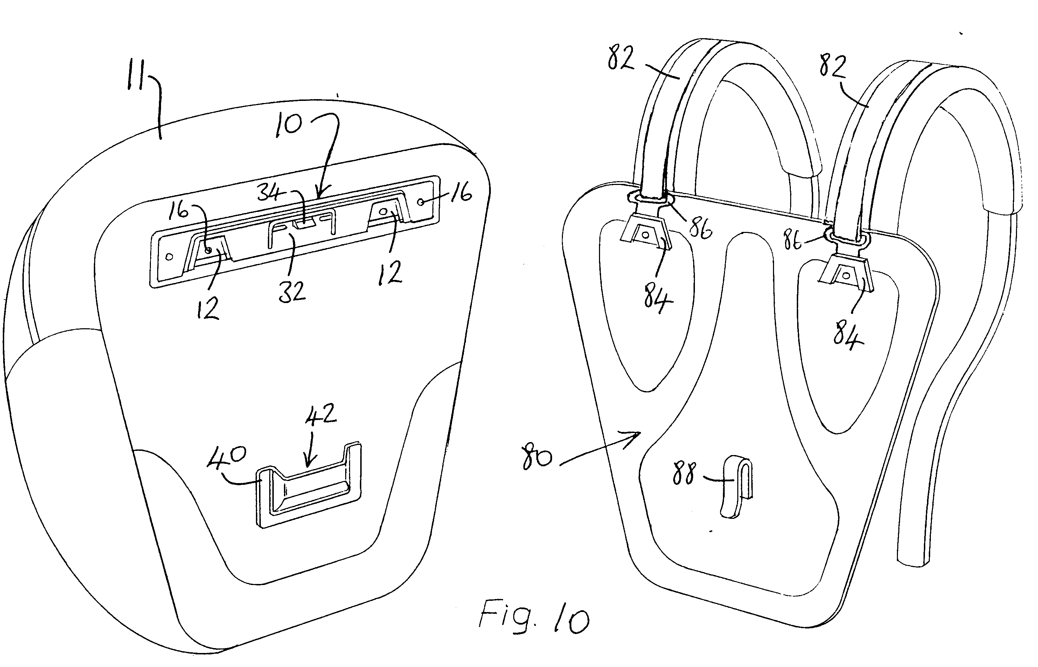

Fig. 10 shows yet another practical embodiment of the attachment means of the invention consisting of five components used for mounting a rucksack back panel onto the rear of a cycle pannier.

Referring firstly to Figs. 1 to 5, this embodiment of attachment means comprises a first member 10, which is secured to the rear panel of a cycle pannier 11, and a second member 20, which in use is fixedly secured to a pannier support frame 21. The first and second members 10, 20 consist of elongate, integrally moulded strips of plastics material, provided with respective complementary, spaced apart engagement portions. In the case of the first member 10 the engagement portions are downwardly open recesses 12 of dovetail shape, having a top edge and side edges which diverge downwardly, and undercut grooves 14 along each of the side edges. Apertures 16 through the back of the recesses 12 and outwardly of the recesses in the material of the attachment member 10 may serve for riveting of the member 10 to the pannier 11, specifically to a stiffened web on the inner face of the rear panel of the pannier, or for fastening thereto in some other manner.

In the case of the second member 20 the engagement portions are projections 22, also of dovetail shape, matching the recesses 12, and also with undercut grooves 24 along downwardly divergent side edges. In this case apertures 26 are provided in each projection 22, e.g. to accommodate heads of rivets or other fasteners in the recesses 12, when the two are interengaged, or to enable fastening of the second member 20 to the cycle frame 21 by bolting to a clamp plate (not shown). In the illustrated embodiment, however, the second member 20 is provided with clips or hooks 28 which are configured to engage as a snug fit over a member of the frame 21, and resist lifting off in the event of bouncing of the pannier when cycling over rough or uneven terrain.

The embodiment illustrated in Figs. 1 to 5 also includes a third member, which in use is bolted at its lower end to the pannier support frame 21 so as to provide an upwardly extending finger 30 below the second member 20. A corresponding further member 40, configured to provide a slot or tunnel 42, is also attached to the pannier 21 below the first member 10.

In use, as will readily be understood by reference to Fig. 1, the pannier 11 is mounted on the side of the frame 21 by the recesses 12 of the first member 10 engaging over the projections 22 of the second member 20, with their respective undercut grooves 14, 24 interfitting. Upon mounting, the finger 30 is at the same time inserted through the slot or tunnel 42 to restrain the lower region of the pannier 11 against unwanted swinging motion.

Centrally, between the recesses 12, the first member 10 is provided with a tab 32 cut out along sides and top edge and formed with a wedge like projection 34 in the middle of its top edge and two auxiliary lugs 36, at either side of its top edge. The tab 32 is capable of flexing or bending slightly relative to the remainder of the first member 10 so that upon engagement with the second member 20, the lateral lugs 36 snap into engagement with corresponding apertures 17, thereby defining the fully secured mounted position of the pannier 11. The wedge-like projection 34 meanwhile rests on an indented upper edge region 18 of the second member 20 thereby providing additional central support for the pannier 11, and also means whereby the tab 32 can be flexed to release the lugs 36 to allow disengagement of the pannier 11 from the frame 21.

Figs. 6 and 7 illustrate an alternative attachment device which may be fitted to the pannier support frame 21 in place of the one piece second attachment member 20. This device comprises a number of separate parts which are fitted together in use so as still to provide a unitary attachment member for mounting of a pannier, such as the pannier 11 carrying its attachment member 10.

More specifically, this alternative device comprises a common elongate support member 50, which is provided with spaced attachment apertures 52 and, centrally positioned between them, an elongate slot 51, a pair of gripping members 54, and a pair of engagement members 56.

The gripping members 54 in this particular embodiment are formed in one piece with the support member 50 by integral moulding of the plastics material of which they are both made and are hingedly connected thereto by thin portions of the plastics material. In other embodiments such gripping members may be quite separate. In any event they serve to grip the rear of the frame member 21 to which the support member 50 is to be mounted, as best seen in Fig. 7. For this purpose they advantageously carry teeth 55 and are provided with an aperture 57 for reception of respective bolts 58 which serve simultaneously for assembly and mounting of the device.

The engagement members 56 each comprise a dovetail shape projection 59 with narrower upper end, broader lower end and downwardly divergent side edges with undercut grooves, for seating thereover of the recesses 12 of the pannier attachment member 10, as well as an adjoining hook-shaped portion 76 for fitting over the support member 50. The hook-shaped portion 76 is provided with a central elongate aperture 77 for reception of the already mentioned fixing bolt 58.

The assembly and mounting of the device will readily be understood by reference to Figs. 6 and 7. The support member 50, which has a curving profile, is placed onto the frame member 21 and the engagement members 56 are then positioned thereon by their hook shape portions 76, with their apertures 77 aligned with the apertures 52 of the support 50. The bolts 58 are then inserted through the aligned apertures 77, 52, and through the gripping members 54 which are swung to the rear of the frame member 21 to serve for clamping of the support member 50 and the engagement members 56 thereto.

Upon mounting of the pannier 11, as the recesses 12 seat onto the projection 59 the lugs 36 on the flexible tab 32 engage in the slot 51 to restrain the pannier 11 from inadvertant lifting off during travel.

This multi-part alternative device for providing spaced engagement portions on a pannier mounting frame of a cycle should prove more adaptable than a one piece device in fitting to different styles of mounting frames with differently positioned over wheel cross-pieces.

Another embodiment of the attachment means, specifically for mounting a pannier to handlebars 60, is illustrated in Figs. 8 and 9. Two additional bracket components 156, 158 are included in the attachment assembly, as well as three jubilee clips 62.

A first member 10 which may conveniently be constructed exactly as in the first embodiment (Fig. 2) is secured to the front pannier 61, as shown. A corresponding cycle-mountable second member 20, with which the first member 10 will engage, as previously described, is fixed to or formed integrally with the bracket component 156.

As shown most clearly in Fig. 8, the bracket component 156 consists of an approximately part-cylindrical portion 66 for fitting on to the central region of cycle handlebars 60, connected by a bridging portion 67, which extends forwardly and approximately perpendicularly from the centre of said portion 66, to a transverse frontal mounting bar 68, on which the said second member 20 is fixed or formed. A reinforced downward extension from the centre of the bar 68 and the bridging portion 66 constitutes a stop or rest 69 for the pannier 61. The other bracket component 158 is T shaped, having crosspiece and shaft both part cylindrical so as to fit onto the region where the handlebars 60 diverge from their central support 63, as indicated in the drawings. The end of the shaft is formed on its exterior with a groove 72 for one of the jubilee clips 62. The ends of the cross piece are formed on their exterior with respective toothed arrays 71, for intermeshing with respective toothed regions 73 on the inner surface at the ends of the part cylindrical portion 66 of the first bracket component 156.

In use, as will readily be understood by reference to Figs. 8 and 9, the bracket component 158 is fitted onto the centre of the handlebars 61, and the shaft portion is secured to the support 63 by a jubilee clip 62 located in the groove 72. The cylindrical portion 66 of the bracket component 156 is then fitted onto the crosspiece of the component 158, with the respective toothed arrays 71, 73 intermeshing. The desired inclination of the bridging portion 67 relative to the handlebars is set by the relative engagement positions of these toothed arrays 71, 73 before the component 56 is secured both to the component 158 and the handlebars by two jubilee clips 62, which are retained inwardly of enlarged end margins 74 of the cylindrical portion 66. Finally, the pannier 61 is mounted by engagement of the member 10 with the member 20, as previously described for the first embodiment. The stop or rest 69 prevents the pannier 61 swinging down. It will be appreciated that the form of the component 158, with the bridging portion 67 mounts the pannier in a cantilever manner, at a spacing in front of the handlebars so that it will not interfere with gripping of the handlebars by the cyclist or with gear or brake components or other items which may be attached to the handlebars.

In all the foregoing exemplary embodiments the pannier has been provided with engagement portions in the form of downwardly open recesses. It is, however, perfectly possible in alternative embodiments to provide the pannier with engagement portions in the form of projections. These would have upwardly divergent side edges and the cycle frame attachment means would then incorporate matching recesses open at the top and with upwardly divergent side edges into which the projections of the pannier would fit.

Also, in the foregoing embodiments both the pannier and the pannier support frame or bracket of the cycle have been provided with respective attachment members carrying spaced engagement portions. Obviously this is a convenient way of fixing the spacing between the engagement portions so that no trouble has to be taken in making accurate measurements or adjustment when connecting the relevant attachment member to the pannier during manufacture or when an end user or manufacturer connects the other attachment member to the cycle mounting frame. Nevertheless it is perfectly possible in other embodiments, and within the scope of the invention, to have engagement portions provided by separate members on one or the other of the elements to be attached, i.e. on the pannier or on the mounting frame therefor.

Fig. 10 shows how a demountable pannier having an attachment member with spaced engagement portions in accordance with the invention may be converted into a rucksack. The pannier depicted here is identical to that in Fig. 1 so the same reference numerals have been used to avoid unnecessary repetition of description.

Basically, a rucksack back panel 80 of fabric or in the form off a stiffened web is provided which has, in addition to shoulder straps 82, a pair of engagement portions in the form of dovetail projections 84 with downwardly divergent side edges which are appropriately spaced and suitably dimensioned to fit into the recesses 12 of the pannier attachment member 10. In this particular embodiment, the projections 84 are provided as separate components, each integrally formed with a respective loop 86 whereby the top of the respective shoulder strap 82 is connected. In other embodiments, the shoulder straps could be attached in some other manner and/or the projections could be formed as part of an integral strip like component comparable to that shown in Fig. 3.

The back panel 80 is also provided in this embodiment with a hook 88 for engaging the pannier slot-forming component 40. Also, although not shown, the back panel 80 will probably be provided around its periphery with addition releasable fastening means, such as strips of barbed fastener material (TM Velcro) or a sliding clasp fastener, with complementary fastener means around the rear of the pannier, so that the whole surface of the panel 80 can be secured to the rear of the pannier, with gaps if need be for projection of the straps 82.

This arrangement for conversion of a cycle pannier to a rucksack, making use of attachment means in accordance with the present invention, contrasts with known arrangements for convertible pannier/rucksacks wherein the shoulder straps are permanently attached to the rear of the sack and folded behind a back panel, which is applied thereover for conversion to a pannier and carries hooks for mounting onto the cycle frame. With the new arrangement, the back panel is used in the rucksack condition instead of the pannier condition, and upon conversion of the rucksack to a pannier it is removed and can be stowed into the sack. This avoids the inconvenience of having to fold and cover the straps in which case they may form an untidy protrusion which interferes with streamlined mounting of the pannier.

It should be emphasised that the foregoing is illustrative and not limitative of the scope of the invention and whilst the attachment means has been described throughout in the context of mounting cycle panniers it could equally be applicable for other applications.

## Claims

1. Attachment means comprising a first attachment member (10) adapted to be fixedly secured to a first element (11) and provided with a first set of at least two spaced apart engagement portions, and a second set of at least two engagement portions which in use are secured to a second element (21), for fitting to the engagement portions of the first member, one of the sets of engagement portions comprising projections (22, 59, 84) with tapering side edges and the other of the sets comprising matching recesses (12) with tapering side edges for location thereover, or for reception thereof.

2. Attachment means as claimed in claim 1 wherein the first attachment member (10) is in the form of an elongate strip or bar.

3. Attachment means as claimed in claim 1 or 2 wherein the first attachment member (10) is formed in one piece by plastics moulding.

4. Attachment means as claimed in claim 1, 2 or 3 wherein the first attachment member (10) is provided, in between its spaced engagement portions (12), with a resilient snap-engagement portion (32 - 36).

5. Attachment means as claimed in claim 4 wherein the snap-engagement portion of the first attachment member comprises a resilient tab (32) carrying at least one lug (36) or other projection (34).

6. Attachment means as claimed in any preceding claim wherein the second set of engagement portions (22, 59) are provided on a common second attachment member (20, 50).

7. Attachment means as claimed in claim 6 wherein the second attachment member (20) is formed in one piece as an elongate strip or bar of plastics.

8. Attachment means as claimed in claim 6 wherein the second attachment member comprises a common elongate support member (50), with spaced attachment apertures (52), one or more securement members (54) for gripping around a cycle frame member (21) and thereby attaching the support member thereto, and respective second engagement portions (59) securable to the support member.

9. Attachment means as claimed in claim 8 wherein each second engagement portion (59) and a respective securement member (54) are connected to the support member (50) by common fastening means (58) by way of a respective one of the attachment apertures (52).

10. Attachment means as claimed in claim 8 or 9 wherein the securement members (54) are hingedly connected to the support member (50).

11. Attachment means as claimed in claim 6 wherein the common second attachment member (20) is provided on or constituted by a bracket (156) adapted for mounting onto cycle handlebars (Figs. 8 & 9).

12. Attachment means as claimed in claim 6 or 7 wherein the common second attachment member (20) is provided with clip portions (28) adapted for engagement of a cycle frame member (21).

13. Attachment means as claimed in any of claims 6 to 12, when dependant on claim 4 or 5, wherein the common second attachment member (20, 50) is provided with one or more apertures or recesses (17, 18; 51) positioned for interfitment of the snap engagement portion (32 -36) of the first attachment member (10).

14. Attachment means as claimed in any preceding claim wherein the projections and recesses (12, 22; 59, 84) of the first and second engagement portions (10, 20, 50) have undercut grooves (14, 24) along their side edges, whereby secure interengagement can be effected.

15. A cycle pannier (11, 61) provided with a transversely disposed elongate attachment member (10) having at least two spaced apart engagement portions (12) in the form of recesses (12) which have upper edges and downwardly divergent side edges and are open at the bottom so as to be capable of seating over corresponding projections (22, 59, 84) with narrower upper ends and broader lower ends.

16. A cycle pannier provided with a transversely disposed elongate attachment member having at least two spaced apart engagement portions in the form of projections which have upwardly divergent side edges, i.e. narrower lower ends and broader upper ends, so as to be capable of snug fitting into corresponding recesses which are open at the top and also have upwardly divergent side edges.

17. A cycle pannier (11, 61) as claimed in claim 15 or 16 wherein the respective recesses or projections (12) of the engagement portions have undercut grooves (14) along their side edges.

18. A cycle pannier as claimed in claim 15, 16 or 17 wherein the attachment member (10) is provided, in between its spaced engagement portions (12), with a resilient snap engagement portion (32 - 36).

19. A cycle pannier as claimed in claim 18 wherein the snap engagement portion comprises a resilient tab (32) carrying at least one lug (36) or other projection (34).

20. A cycle pannier (11) as claimed in any of claims 14 to 19 provided with an auxiliary attachment member (40), at a spacing below the elongate member (10), said auxiliary member being configured to provide a slot or tunnel (42) for engagement by a clip, hook or finger (30) upon mounting of the pannier (11) onto a cycle frame (21).

21. A rucksack comprising a cycle pannier (11) as claimed in any of claims 15 to 20 in combination with a back panel (80) which is provided with shoulder straps (82) and which is also provided, on one surface, with spaced apart second engagement portions (84) comprising either projections with narrower upper ends and broader lower ends or recesses which are open at the top and have upwardly divergent side edges, which respectively engage with the respective engagement portions (12) of the pannier (Fig. 10).

22. A rucksack as claimed in claim 21 wherein each second engagement portion (84) of the back panel (80) is formed integrally with a respective shoulder strap attachment portion (86).

Fig. 1

10

16

34

36

16

16

16

12

14

36

36

32

12

14

*Fig. 2*

40

*Fig. 4*

24

20

17

18

17

24

26

22

24

26

22

22

26

30

*Fig. 3*

*Fig.5*

EP 0 477 010 A1

EP 0 477 010 A1

21

52

50

51

52

71

58

76

59

56

57

54

65

71

76

57

55

50

56

58

54

58

59

76

55

58

54

56

59

Fig. 7

Fig. 6

Fig. 8

Fig. 9

Fig. 10

EP 0 477 010 A1

European Patent
Office

**EUROPEAN SEARCH REPORT**

Application Number

EP 91 30 8544

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 127 921 (COLLET) <br><br> * the whole document * | 1-3, 15-17 | B62J9/00 |
| A | | 7 | |
| A | US-A-4 353 490 (JACKSON) <br><br> * column 3, line 13 - column 5, line 44; figures 1-7 * | 1,15,16, 18,20 | |
| A | US-A-4 301 952 (MCNEILL) <br><br> * column 3, line 38 - column 4, line 40; figure 3 * | 4,5,12, 18,19 | |
| A | FR-A-1 259 224 (ETABLISSEMENTS HENRY & C.) <br> * the whole document * | 21,22 | |
| A | US-A-4 433 802 (WOOLF) <br> * abstract; figures 6,7 * | 21,22 | |

TECHNICAL FIELDS
SEARCHED (Int. Cl.5)

B62J

The present search report has been drawn up for all claims

| Place of search | Date of completion of the search | Examiner |
|---|---|---|
| THE HAGUE | 18 DECEMBER 1991 | DENICOLAI G. |

EPO FORM 1503 03.82 (P0401)